# EUROPEAN PATENT SPECIFICATION

(11) **EP 4 288 827 B1**
(45) Date of publication and mention of the grant of the patent: **16.04.2025**
(21) Application number: 21836068.3
(22) Date of filing: 07.12.2021
(51) Int. Cl.: G02B 27/62, G02B 27/01

(54) **PROJECTOR ALIGNMENT SYSTEM**
PROJEKTORAUSRICHTUNGSSYSTEM
SYSTÈME D'ALIGNEMENT DE PROJECTEUR

(30) Priority: 03.02.2021 EP 21155080
(43) Date of publication of application: 13.12.2023
(73) Proprietor: Snap Inc., Santa Monica, CA 90405 (US)
(72) Inventor: PICKERING, Stuart Robert, Abingdon Oxfordshire OX14 4SR (GB); PORTER, Timothy John, Abingdon Oxfordshire OX14 4SR (GB)
(74) Representative: Gill Jennings & Every LLP
(86) International application number: PCT/EP2021/084658
(87) International publication number: WO 2022/167126

(56) References cited:
- US-A1- 2020 278 554

## Description

### Field

The present invention relates to a method and system for aligning projectors on an AR/VR device, specifically a waveguide AR/VR device.

### Background

A large proportion of augmented reality (AR) devices utilise waveguide technology to display images. In these types of devices, typically a projector couples light, representing an image, into the waveguide. The light travels by total internal reflection along the waveguide towards an output region where it is coupled out to the viewer's eyes such that the viewer sees the image augmented on their real world view.

Correct alignment of the projector is required to ensure that this light is efficiently coupled into the waveguide and ensure that it is coupled in at the desired orientation. In addition, the AR device may have a separate projector and waveguide for each eye. Therefore, it is desirable that the projectors are accurately aligned with each other, and with respect to the housing, such that the image viewed by each eye is identical and converges. However, achieving precise alignment can be difficult.

The present invention sets out to solve this problem of achieving accurate alignment of projectors on these types of AR devices.

### Summary of Invention

The invention is defined by the independent claims, and preferred embodiments are set out in the dependent claims.

According to a first aspect there is provided, an augmented reality (AR) or virtual reality (VR), device, the AR or VR device comprising: a waveguide, comprising of at least, an input region configured to receive light incident along a first direction, and an output region, wherein the waveguide is configured such that a first portion of the light passes along the waveguide, in a direction substantially perpendicular to the first direction, by total internal reflection towards the output region where it is outcoupled to a viewer to thereby form an image; a projector arranged adjacent to the waveguide, the projector for projecting the light into the waveguide at the input region; a housing for holding the projector and the waveguide with respect to one another, the housing comprising an aperture, the aperture arranged adjacent to the input region and spaced therefrom along the first direction on an opposite side of the input region to the projector.

The aperture may be used in the alignment of the projector on the device, such as when the device is being assembled. This may be achieved as a portion of the light from the projector can pass straight through the waveguide along the first direction, and through the aperture, before being incident on a target forming an image. Thus, a calibration can be carried out by adjusting the angular position of the projector or a prism/mirror such that the image formed at the target can be used to align the angular position of the projector or prism/mirror with respect to a known reference point on the target. This calibration can ensure that the projector and the housing are aligned with respect to each other as desired.

By having the aperture, or hole, in the housing the light that passes straight through the input region of the waveguide, which is not coupled along the waveguide, can be used to align the projector.

The light is preferably incident on a first side of the input region, and a portion of the light can pass through the input region before exiting a second side opposite to the first side. The aperture is positioned at the second side of the input region, i.e. at the opposite side of the input region to the projector. In this way, the input region is positioned between the aperture and the projector.

Preferably, the aperture extends through the housing along the first direction. When being used for alignment, the aperture provides a channel through the housing such that a portion of the light from the projector, after being incident on the input region, can pass straight through the housing along the first direction, such that it can form an image at a target, as outlined above.

The first direction may be a first axis. For instance, the input region may be configured to receive light incident along the x axis and the light propagates along the waveguide in a direction substantially perpendicular to the first direction such as in the z and/or y axis.

The aperture may have a first end and a second end such that the aperture extends from the first end to the second end, the first adjacent to the input region, wherein the aperture is closed at the second end. In some arrangements, a cover may be positioned at the second end of the aperture, such that the aperture is closed at the second end. Having a cover at the second end of the aperture prevents light from being projected from the device along the first direction, which is undesirable when in use. The purpose of the aperture is to aid in alignment of the projector, whereas the AR view for the viewer is provided by the light output from the output region. In this way, when the AR/VR device is in use the aperture may perform no purpose, with its purpose being for use in alignment of the projector before use and/or during assembly of the device.

The cover may be a cap, or any type of fitting that can be used to block out the aperture. The cover may be the same material of the housing. Alternatively, it may be a different material. The cap may be plastic, rubber, or any type of light blocking material. The cover may be of a size that similar, or identical, to the size of the aperture such that it is placed within the aperture to prevent the emittance of light from the aperture, as mentioned above. Alternatively, the cover may be larger than the aperture such that when applied it extends over the aperture to prevent the emittance of light from the aperture. In other arrangements, a plug, or filler, may be located in the aperture when the device is in use. The plug, or filler, may extend along the length of the aperture preventing light from passing through the aperture when the device is in use.

In some arrangements the projector may be positioned on the housing such that it emits the light in the first direction. In other arrangements one or more optical components may be positioned on the optical path between the projector and the waveguide to ensure light is coupled into the input region along the first direction. For instance, the projector may be arranged such that it emits light perpendicular to the first direction, and the device may comprise an optical component which is configured to change the direction of the light emitted from the projector such that it is incident on the input region along the first direction. For instance, a prism, mirror or other optical component may be used to change the path of the light from the projector such that it is still incident on the waveguide at the first direction. The term adjacent in this context, such as the projector arranged adjacent to the waveguide, is used to imply that the projector is next to or in close proximity.

The skilled person would be aware that adjusting the position of the projector with respect to the housing need not necessarily be limited to only adjusting the position of the projector itself. This is the effective position of the projector. In other words, the skilled person would understand that this could mean any adjustment of the angular position of the projector and/or an optical component (such as a prism, or mirror) in the path between the projector and the aperture.

Preferably the input region is a diffractive input grating. The input grating may be configured to couple the light from the projector into the waveguide. Preferably the input diffraction grating may comprise grooves in one surface of the waveguide. The input grating may be a one-dimensional diffraction grating comprising grooves in one surface of the waveguide. The input grating may be an input grating as described in WO 2016/020643. As input gratings are not perfect at coupling light from the projector into the waveguide a portion of the light may pass straight out of the waveguide through the input grating and into the aperture, rather than being coupled into the waveguide. This portion of light may be used for projector alignment.

The output region of the waveguide may be a diffractive output grating. The output grating may provide two dimensional expansion and outcoupling of the light to the viewer. The output grating may be an output grating as described in WO 2016/020643. Alternatively, the output region may comprise a plurality of gratings, each grating providing expansion of the light in a different dimension. The output grating may be spaced at a position along the waveguide, in a direction perpendicular to the first direction at which light is incident on the input region.

Preferably, the device may comprise a pair of projectors and a pair of waveguides, each having an associated aperture arranged adjacent to the input region of its associated waveguide and spaced therefrom along the first direction on an opposite side of the input region to its associated projector. Each waveguide may be associated with a specific eye of the wearer, such that it is configured to project light to a specific eye of the wearer. The housing may extend between a first end and a second end defining an axis perpendicular to the first direction at which light is incident on the waveguide. A first waveguide, and its associated projector and aperture, may be positioned at a first end of the housing, and a second waveguide, and its associated projector and aperture, may be positioned at a second end of the housing.

The housing may be the frame, i.e. chassis, of the AR/VR device. It may act as a support for holding the waveguide and projectors together. In some instances, the AR/VR device may be a headset configured to be worn on a user's head. The housing may be the frame of such a headset. Alternatively, the AR/VR device may be goggles, glasses, or any other type of AR/VR device configured to be worn by a user. The housing may be the frame of the goggles/glasses. Alternatively, the AR/VR device may be a head-up display.

The aperture may be a hole, or gap, in the housing that has the sole purpose of being used for alignment of the projector. The aperture provides a light path from the projector, through the input region of the waveguide, and through the housing so that light can be incident on the target during an alignment process. The aperture may have a circular cross section. Alternatively, it may have rectangular, square, or any other shape cross section. The depth of the aperture may be equal to the thickness of the part of the housing in which it is formed.

Although it is stated above that the purpose of the aperture is for use in alignment to receive light from the projector after having passed through the input grating of the waveguide, it will be understood that the alignment process itself may have been completed prior to the waveguide being present on the device. In this way, the light from the projector passes through the region where the input grating is to be located when the device is assembled.

The projector may be any type of light engine that is capable of projecting light into a waveguide. This may be any type of picoprojector. For instance, the projector might comprise a liquid crystal on silicon, LCOS, panel and a light source. The LCOS panel may be positioned in the light path between the light source and the input region of the waveguide. The LCOS panel may be responsible for forming the image with the light incident on it from the lightsource. The image may then be projected as an input pupil onto the input region of the waveguide. The light source may be an array of LEDs. Alternatively, any other type of image generating means, or light source may be used. For instance, the light source may be a lamp or laser. The panel may be any type of image generator including self-emissive panel, transmissive liquid crystal display, reflective liquid crystal panel, scanning laser beam generator, digital light processing panels, or dynamic mirror arrays. The projector may be polychromatic. Alternatively, the projector may be monochromatic.

The waveguide may be a planar slab waveguide. The largest axis of the planar slab waveguide may be perpendicular to the first direction, i.e. the planar faces of the waveguide may be perpendicular to the first direction. The input and/or output grating may be placed in or on the waveguide. For instance, it may be placed on one of the external faces of the slab. Alternatively, it may be placed within the waveguide as long as the refractive indices of the grating is different from the refractive index of the slab. The purpose of the waveguide is to act as a near eye display for the AR/VR device.

The waveguide may comprise: a planar slab of transparent optical material surrounded by a medium with a refractive index lower than the refractive index of the planar slab such that when light arranged to have a sufficiently large angle of incidence will be confined within the slab in the direction normal to the planar faces of the slab by total internal reflection. Preferably, the planar faces of the slab are parallel to the plane of the grating.

According to a further aspect there is provided, a method of aligning a projector on an augmented reality (AR) or virtual reality (VR), device, the AR or VR device comprising a housing for holding the projector and a waveguide of the AR or VR device with respect to one another the housing comprising an aperture, the aperture arranged adjacent to an input region of the waveguide when the waveguide is located on the housing and spaced therefrom along a first direction on an opposite side of the input region to the projector, the method comprising: positioning the projector on the housing; coupling light from the projector along the first direction through the aperture in the housing such that it forms an image at a target; comparing the image formed at the target to a reference point; adjusting the position of the projector with respect to the housing until said image formed at the target is at a desired position with respect to the reference point which indicates that the projector is correctly aligned on the housing.

In this way, a portion of the light from the projector can pass straight through the aperture along the first direction before being incident on the target. Thus, a calibration can be carried out by adjusting the position of the projector such that the image formed at the target can be used to align the position of the projector with respect to a reference point. This calibration can ensure that the projector and the housing are aligned with respect to each other as desired. This may be carried out prior to placing the waveguide on the housing. Alternatively, it might be carried out when the waveguide is located on the housing.

The skilled person would be aware that adjusting the position of the projector with respect to the housing need not necessarily be limited to only adjusting the position of the projector itself. This is the effective position of the projector. In other words, the skilled person would understand that this could mean any adjustment of the angular position of the projector and/or an optical component (such as a prism, or mirror) in the path between the projector and the aperture which affects the path of the light from the projector.

The correct alignment of the projector may be an alignment that has been predetermined as being the ideal alignment of the projector. For instance, ensuring the maximum light can be coupled into the waveguide at the desired angle (for instance, when the waveguide is correctly positioned). The correct alignment may be an arbitrary point that has been selected with respect to which the other components (such as a further projector, and/or waveguides) may be aligned, as will be outlined below. In this way, the projector is correctly aligned with respect to a known reference point, enabling the other components of the device to be accuracy aligned with respect to the projector as desired.

Preferably, the reference point may be a reference image having at least one characteristic to which the image formed at the target is to be aligned. In this way, the characteristic of the reference image acts as a point to which the image formed at the target can be aligned. The at least one characteristic may be the shape of the reference image.

In some instance, the characteristic may be a common feature between the images. For instance, a common shape, or portion of a shape.

The at least one characteristic may be a shape of at least a portion of the reference image, and a shape of at least a portion of the image formed at the target is identical to the shape of at least a portion of the reference image. The reference image and the image formed at the target may have identical shapes to one another. The size of the reference image and the image formed at the target may also be identical. For instance, the reference image and target image may be a circle, square, cross shape, or any other shape that would enable alignment to be achieved. In other arrangements only a portion of the reference image may be identical to the image formed at the target. Alignment may be achieved by comparing the portion of the reference image that is identical to the image formed at the target. Alternatively only a portion of the image formed at the target may be identical to the reference image.

In other arrangements the shape of the image formed at the target may be different to the shape of the reference image. For instance, the reference image may be a square or rectangle and the image formed at the target may be cross shape. In this arrangement, the correct alignment may be achieved when the centre of the cross is located at the centre of the circle.

The image formed at the target may be at a desired position with respect to the reference point when the image formed at the target overlays the reference image.

This enables an accurate alignment of the projector to be achieved. In addition, it provides an easy visual way for the user to know when the correct alignment has been achieved. The overlay may be an exact overlay. For instance, the projector may be correctly aligned when the image formed at the target and reference images are directly overlaid on top of one another. In other arrangements, the overlay may be only a partial overlay. For instance, where the image formed at the target and the reference image are not exactly the same shape the image formed at the target may only need to overlay a certain position of the reference image.

In some arrangements, the screen may be a wall, such as in the room in which the alignment is taking place. This may be a fixed wall, or a temporary wall. Alternatively, the screen may be a movable screen that can be placed at a desired position. The light may be projected directly on said screen thereby forming said image at the target.

The reference point may be a physical feature that is located on the screen. For instance, it may be an image on a poster that is hung on the screen, or it may have been drawn directly onto the screen/wall. Alternatively, the reference point may be an image projected onto the screen by an external light source.

The method may further comprise: capturing, with a camera, the image formed at the target and displaying on a screen said image formed at the target and said reference point and performing said steps of comparing and adjusting.

In some arrangements, the target may comprise a camera, wherein the light that passes through the aperture is captured by the camera to thereby form said image formed at the target. In this way, rather than projecting the light directly on a screen, the light may be detected by the camera. Advantageously, by using the camera the distance required for the alignment system can be reduced as the camera may be positioned closer to the AR/VR device than the convergence distance of the image.

In other arrangements, the camera may be placed at a distance from the wall in order to capture the image formed at the target. This may be instead of a user viewing the image directly on the wall.

The light captured by the camera may be displayed as an image on a display. This may be an external display, such as a monitor or other type of electronic display. This may allow the user to carry out the comparison and adjustment in the same way as when the light is projected directly onto a physical screen, but with a greater convenience. The monitor may be connected to one or more processors.

In other arrangements, rather than displaying the image on the display, directions may be displayed to the user as to what adjustments to make to the position of the projector to achieve alignment. For instance, instructions may be provided such as "move up", "move down", "move to left", "move to right". This may be achieved by having a processor which is configured to analyse the light received at the target and compare it to the reference point thereby to determine the movement of the projector required to achieve alignment. In other arrangements, these instructions may be provided in addition to the images, enabling the user to use the directions or the comparison of images.

Adjusting the position of the projector may involve an angular adjustment of the projector. These angular adjustments may be through pitch, yaw, and/or roll. For instance, this may involve moving the projector up or down, left or right, or tilting the projector forwards or backwards. The position of the image formed at the target (and its orientation) may inform the type of movement required to achieve alignment.

In some arrangements, positioning the projector on the housing involves positioning the projector on the housing adjacent the input region of the waveguide; and wherein coupling light from the projector along the first direction through the aperture in the housing such that it forms an image at a target further comprises: coupling light from the projector onto the input region of the waveguide, such that the light is incident on the input region in a first direction such that: a first portion of the light passes along the waveguide in a direction substantially perpendicular to the first direction by total internal reflection towards an output region of the waveguide for outcoupling light to a viewer; and a second portion of the light passes straight through the waveguide in the first direction and through the aperture in the housing such that it forms an image at a target.

For instance, the method of aligning may be carried out after the waveguide has been located on the housing. In this way, a portion of the light from the projector can pass straight through the waveguide along the first direction before being incident on the target. Thus, a calibration can be carried out by adjusting the position of the projector such that the image formed at the target can be used to align the position of the projector with respect to a reference point. This calibration can ensure that the projector and the housing are aligned with respect to each other as desired.

The alignment is with respect to the housing. By having an aperture, or hole, in the housing the light that passes straight through the input region of the waveguide, which is not coupled along the waveguide, can be used to align the projector.

Alternatively, the alignment of the projector may be carried out prior to the waveguide being located on the housing. For instance, when in a transmission arrangement, i.e. where the projector is arranged on the opposite side of the waveguide to the eye (when viewing the light output from the output grating), the waveguide may have no effect on the alignment of the projector. Therefore, the waveguide need not be in place prior to aligning the projector. In contrast, when in a reflection arrangement, i.e. where the projector is arranged on the same side of the waveguide as the eye (when viewing the light output from the output grating), the waveguide does have an effect on the alignment of the projector. Therefore, in reflection mode the waveguide may be located on the waveguide prior to aligning the projector, or alternatively further adjustment of the projector alignment may be carried out to correct the alignment of the projector upon placing the waveguide on the housing.

Preferably, the projector is a first projector, and the AR/VR device comprises a second projector, the method may further comprise aligning the second projector on the housing through performing the method as outlined above on the second projector.

Advantageously, through aligning both projectors accurately with respect to the housing, each projector can be accurately aligned with respect to each other. In this way, the light from each of the projectors may be emitted in the same direction to each other when correctly aligned on the housing.

The waveguide may be a first waveguide, and the second projector may be associated with a second waveguide. The first and second waveguides may be identical to each other, each having an input and output region. The first projector may couple light into the first waveguide and the second projector may couple light into the second waveguide. The first projector and the first waveguide may be associated with a first eye of the user, and the second projector and the second waveguide may be associated with a second eye of the user. In this way, when correctly aligned each projector may form an image when light is coupled out of its respective output region to the eye of the user. Thus, the projectors may be positioned at opposite ends of the headset to each other, as explained above.

As each projector forms its own image at the target, each projector can be aligned independently of the other projector. The alignment of each projector may be carried out concurrently or sequentially. For instance, the alignment of the second projector may be carried out after the alignment of the first projector (is complete. Alternatively, gradual adjustments may be made to each projector such that they are both adjusted towards the desired alignment.

In some arrangements, the reference point used to align the second projector may be a different reference point to the reference point to which the first projector was aligned. For instance, there may be separate images to which the image formed at the target by each projector aligns. These reference images may be identical to each other. For instance, they may have the same shape. Preferably, they may be spaced apart from each other on the target. For instance, the reference image to which the image formed at the target by the first projector is to be aligned may be at a first position on the target, and the reference image to which the image formed at the target by the second projector may be at a different position on the target, where the first and second positions may be different to each other. The position of the reference point used to align the first projector may be at a known position with respect to the reference point used to align the second projector. For instance, the position of both reference points may be selected such that when aligned to their respective reference point both projectors are correctly aligned with respect to each other.

In other arrangements the reference image which is used to align the first projector may differ in at least one characteristic to the reference image to which is used to align the second projector. For instance, the reference images may have different colours, and or shapes to each other.

In addition, the image formed at the target by the first projector may differ by at least one characteristic to the image formed at the target by the second projector. For instance, the image formed at the target by each projector may have different colours, and or shapes to each other. Advantageously, this allows the user to distinguish between the images from each projector such that they know which projector requires alignment. In arrangements the image formed at the target from the first projector and its corresponding reference image may be identical, and the image formed at the target from the second projector and its corresponding reference image may be identical. This further enables the user to know which image that has been formed should be aligned with which reference image.

Alternatively, in other arrangements the image formed at the target from the first projector may be the same (i.e. same characteristics) as the image formed at the target by the second projector.

In other arrangements, the reference point may be the same. For instance, the reference point may be an image having a first portion of said image to which the image formed at the target by the first projector is aligned, and a second different portion of said image to which the image formed at the target by the second projector is aligned.

After the first projector and the second projector are correctly aligned on the housing the method may further comprise: viewing a first image formed by the first portion of light from the first projector after being outcoupled at the output region of the first waveguide; viewing a second image formed by the first portion of light from the second projector after being outcoupled at the output region of the second waveguide; adjusting the position of the first waveguide and the second waveguide until said first image and second image are overlaid on one another.

As the projectors have already been aligned with respect to each other the relative position between them is not changed. However, if the projectors and waveguides are in a reflection mode (such that the projector is on the eye side of the waveguide) then the waveguides and the projector need to be appropriately aligned such that convergence of the images formed from the projectors, from the light outcoupled from the output region, can be achieved. In this way, both projectors are correctly aligned with respect to their waveguides and each other. If the projectors are used in transmission mode (the projector is on the opposite side of the waveguide to the eye) then only the projector requires alignment to ensure convergence of the images formed from the projectors. The waveguides do not need to be adjusted in the alignment process in transmission mode.

In reflection mode, through aligning the projectors with respect to the housing less movement of the waveguides are required when performing the adjustment of the position of the waveguide to achieve convergence than if the projectors had not first been aligned. Advantageously, this can reduce the amount of space required on the AR/VR device to allow movement of the waveguides. Thus, when assembling the device the housing can be more tightly packed together, reducing the overall size of the AR/VR device.

Adjusting the position of the waveguides may involve adjusting the orientation with respect to each other and hence the housing and projectors. For instance, the adjustment of the waveguides may be an angular adjustment. This may be in pitch and/or yaw.

Alignment may be achieved when the first image and the second image are overlaid on each other. This may be a direct overlay on one another. The first and second image may be the same shape as the image formed at the target from the second portion of light for each respective projector. In this way, the first and second images may appear the same as the image formed at the target used for aligning the respective projector, although they may appear at different positions on the display. In some arrangements the first and second image may differ in size compared to the image formed at the target from the second portion of light for each respective projector. In other arrangements the size may be same.

Unlike the images formed at the target used for aligning the projectors, the first and second images can be considered as virtual images, in that although they are visualised by the user and appear at the target when looking through the output region of the waveguide, they are not actually visible when looking at the target unless viewed through the output region of the waveguide.

Preferably, adjusting the position of the first and second waveguide may further comprise adjusting said position such that the first and second images appear overlaid on a further reference image at the target. In this way, the convergence of the first and second image from the projectors when viewed through the output regions of the waveguides may be achieved through aligning the first and second image with the further reference image. Providing the user with a visual indicator to achieve this correct positioning improves the accuracy that can be achieved with the alignment. In addition, it aids in the easy alignment of the system. This further reference image may have the same shape as the first and/or second image. Alternatively, it may have a shape to which the first and second images can be aligned.

In some arrangements, the further reference image used to adjust the position of the waveguides with respect to each other may be located at the target positioned between the reference images to which each of the projectors are aligned. For instance, it may be located at the midpoint between said reference images.

Preferably, the housing is at a known position with respect to the target. The known position in space may be a specific spatial position. In addition or alternatively, it may be a specific orientation of the housing. By knowing the exact position of the housing with respect to the target this can aid in achieving accurate alignment. For instance, the reference point may have been selected as a point that represents correct alignment of the projector when the housing is at this known position with respect to the target.

Preferably, the target may be at a predetermined distance from the AR/VR device. It may be desirable that the image formed by the AR/VR device, outcoupled to a viewer, converges at a certain distance. The target may be positioned at this desired distance of convergence. This enables the full field of view to be viewed during the alignment process. It also further aids in correcting the convergence of the image. Preferably, this distance may be 4m. However, this may be 1m, 2m, 3m, or any other distance at which convergence is desired.

Alternatively, the target may be closer than the desired convergence distance. In this arrangement the full field of view would not be viewable, but the alignment correction would still be possible. This is advantageous, as less space may be required than using the full distance at which convergence is to be achieved.

Preferably, after the projector is correctly aligned the method may comprise applying a cover to the aperture of the housing such that light can no longer pass through said aperture. The purpose of the aperture is to aid in the alignment of the projector with respect to the housing. By covering up the aperture the second portion of light from the projector can no longer form the image on the target. Advantageously, this acts to stop light from being emitted from the AR/VR device, in a direction away from the user of the device, through the aperture when in normal use which would be undesirable when the device is in use. A cover may be applied to each aperture associated with each projector.

According to a further aspect, there is provided a system for aligning a projector on an augmented reality (AR) or virtual reality (VR) device, the system comprising: an augmented reality (AR) or virtual reality (VR) device comprising: a waveguide for displaying an AR or VR image, comprising an input region for receiving light and an output region at which light is outcoupled to a viewer; a projector arranged adjacent to the waveguide display, the projector for projecting light into the waveguide at the input region such that a first portion of the light passes along the waveguide by total internal reflection towards the output region; a housing for holding the projector and the waveguide with respect to one another, wherein the housing comprises an aperture arranged such that a second portion of the light incident on the input region passes straight out through the aperture and onto a target thereby forming an image at the target; and a target for providing a reference point to which the image formed on the target can be compared to thereby align the projector on the housing.

The system may be configured to perform the method of the above aspect.

The AR/VR device may be the device according to the above aspect.

The system may further comprise a camera, as described in the above aspect. Alternatively, or in addition, the target may comprise a screen.

According to a further aspect there is provided a system for aligning a projector on an augmented reality (AR) or virtual reality (VR), device, the system comprising: an AR or VR device comprising a projector, a housing for holding the projector and a waveguide of the AR or VR device with respect to one another the housing comprising an aperture, the aperture arranged adjacent to an input region of the waveguide when the waveguide is located on the housing and spaced therefrom along a first direction on an opposite side of the input region to the projector; and a target for providing a reference point to which an image formed on the target can be compared to thereby align the projector on the housing, wherein the system is configured to perform the method of the above aspect.

According to an aspect of the invention there is provided a method of aligning a projector on an augmented reality (AR) or virtual reality (VR), device, the AR or VR device comprising a waveguide, and a housing for holding the projector and the waveguide with respect to one another, the method comprising: positioning the projector adjacent an input region of the waveguide; coupling light from the projector onto the input region of the waveguide, such that the light is incident on the input region in a first direction such that: a first portion of the light passes along the waveguide in a direction substantially perpendicular to the first direction by total internal reflection towards an output region of the waveguide for outcoupling light to a viewer; and a second portion of the light passes straight through the waveguide in the first direction and through an aperture in the housing such that it forms an image at the target; comparing the image formed at the target to a reference point; adjusting the position of the projector with respect to the housing until said image formed at the target is at a desired position with respect to the reference point which indicates that the projector is correctly aligned on the housing.

It should be noted that any feature in a particular aspect described herein may be applied to any other aspect described herein, in any appropriate combination. It should also be appreciated that particular combinations of the various features described and defined in any aspects described herein can be implemented and/or supplied and/or used independently.

### Brief Description of Drawings

Figure 1 is a schematic top down cross-sectional view of an augmented reality (AR) headset according to an aspect of the invention;
Figure 2 is a schematic side on cross-sectional view of an example system for aligning a projector on an AR headset in reflection mode;
Figure 3 is a schematic top down cross-sectional view of an AR headset having a first projector that has been aligned with respect to the housing and a second projector that is being aligned on the AR headset;
Figure 4A-D show example images formed by the projectors at a target and example reference images according to an aspect of the invention, at various stages of the alignment of the projectors;
Figure 5 shows example images formed by the projectors at the target and further example reference images according to a further aspect of the invention;
Figure 6 shows example images formed by the projectors at the target and further example reference images according to a further aspect of the invention;
Figure 7 shows a schematic top down cross-sectional view of an AR headset showing the light from the projectors incident on the target according to an aspect of the invention;
Figure 8 is a schematic side on cross-sectional view of a further example system for aligning a projector on an AR headset;
Figure 9 is a schematic side on cross-sectional view of an example system for aligning a projector on an AR headset in transmission mode;
Figure 10A and 10B show a schematic top down cross-sectional view of an AR headset in reflection and transmission mode respectively; and
Figure 11 is an example method of aligning a projector on an AR device.

### Detailed Description

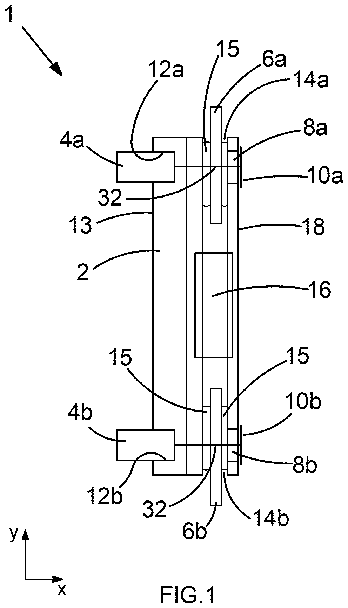

Figure 1 shows a schematic top down cross-sectional view of an example AR headset 1. AR headset 1 is formed of housing 2 in which a pair of projectors 4a 4b are housed. The housing 2, otherwise called the frame, forms the structure which holds the components of the AR headset 1 with respect to each other. The housing 2 has a first portion 13 having two cavities 12a 12b. Each projector 4a 4b is located within its respective cavity 12a 12b within the first portion 13 of the housing 2. Once aligned the projectors 4a 4b are fixed within their respective cavity 12a 12b. The housing 2 has a substantially elongate shape extending along the y-axis as shown in Figure 1, with the projectors 4a 4b positioned at opposite ends of the housing 2 along the y-axis.

A pair of waveguides 6a 6b are also located on the housing 2. Each projector 4a 4b is associated with a particular one of the waveguides 6a 6b. The waveguides 6a 6b are offset along the x-axis with respect to their associated projector 4a 4b. As shown in Figure 1, waveguide 6a is located on the light path of projector 4a, and waveguide 6b is on the light path of projector 4b. Thus, each waveguide 6a 6b is at opposite ends of the housing to each other along the y-axis.

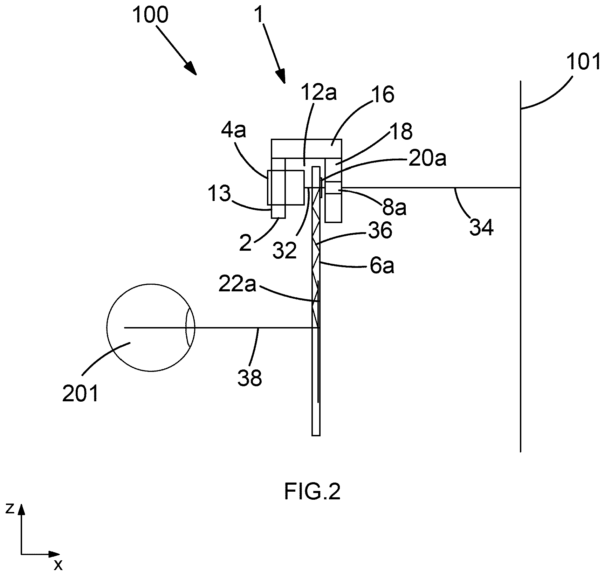

The housing 2 further comprises a second portion 18 separated by a gap (along the x-axis) from the first potion. An attachment portion 16 of the housing 2 connects the first 13 and second portions 18 at the point approximately midway between the first 4a and second 4b projectors. The first 13, second 18, and attachment portions 16 of the housing thereby form slots 14a 14b. Each waveguide 6a 6b is located within an associated slot 14a 14b. The waveguides 6a 6b, once correctly positioned within their slots 14a 14b, are fixed in place using glue 15, although any other type of fixing mechanism may be used. As can be seen in Figure 2 the projectors 4a 4b protrude through cavities 12a 12b into the associated slots 14a 14b such that there is a light path between each projector 4a 4b and its associated waveguide 6a 6b.

The second portion 18 of the housing 1 includes a pair of apertures 8a 8b, each aperture associated with a waveguide 6a 6b and positioned along the x-axis with respect to said waveguide 6a 6b. The apertures 8a 8b are located on the opposite side of their associated waveguide 6a 6b to its associated projector 4a 4b. The apertures 8a 8b are effectively a hole, or gap, in the housing. A cap 10a 10b is positioned over each aperture 8a 8b on the opposite side of the aperture to the waveguide.

Attachment means (not shown) provide the attachment of the headset 1 to the wearer's head. This may include temples, an elasticated strap configured to wrap around and/or over the head, or any other known means.

When the headset 1 is in use, light from each projector 4a 4b passes out of the projector into its associated waveguide 6a 6b along the x-direction as can be seen as rays 32. Each waveguide 6a 6b is associated with a different eye of the user, such that each waveguide 6a 6b acts as a near-eye display. For instance, waveguide 6a is associated with the wearer's left eye and waveguide 6b is associated with the wearer's right eye. Further explanation as to the use of the waveguide will be described in relation to Figure 2 below.

Figure 2 is a schematic side on cross-sectional view of an example system 100 for aligning the projector 4a on the AR device 1 as shown in Figure 1. The same features are shown having the same reference numerals as in Figure 1. The projector 4a is located in cavity 12a, although it has not yet been aligned within the cavity 12a with respect to the housing 2. Cover 10a is also not located over aperture 8a. The AR headset 100 is in reflection mode, in that the user 201 views the virtual image from the same side of the waveguide as where the projector 4a is located.

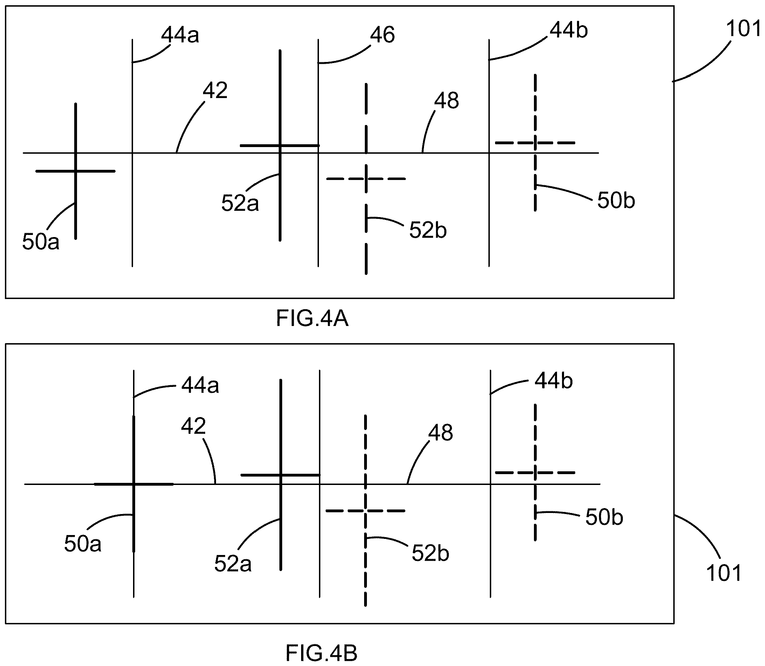

The wearer's left eye 201 is shown adjacent to the waveguide 6a. A screen 101 is located on the opposite side of the waveguide 6a to the wearer's eye 201 (i.e. displaced along the x direction). The screen 101 may be a wall, a temporary screen or other suitable surface on which one or more reference images are located (as will be described in relation to Figure 4A-D below).

Further details of the waveguide 6a are shown in Figure 2 which were not viewable in Figure 1. Waveguide has an input grating 20a which is located at the end of the waveguide 6a where the projector 4a is positioned. The input grating 20a is a reflective diffraction grating. It is located on the face of the waveguide 6a closest to the aperture 8a, i.e. furthest from the projector 4a. Waveguide 6a also has output grating 22a located towards the opposite end of the waveguide 6a to the input grating. The output grating 22a is on the same face of the waveguide 6a as the input grating 20a.

The path of light from the projector 4a during the alignment process is shown in Figure 2. Light from the projector 4a is incident on the input grating 20a of the waveguide 6a along the x-direction as shown in ray 32. The input grating 20a couples a portion of the light into the waveguide 6a as shown by ray 36. The light coupled into the waveguide 36 will be turned such that it expands in the -z and ±y directions. This provides 2D expansion of the light. As can be seen in Figure 2, the light travels along the waveguide 36 through total internal reflection until it reaches output grating 22a. The light is then out coupled to the eye 201 forming a virtual image at the eye 201. This path 36 of the light through the waveguide is what forms the AR image viewed by the wearer when outcoupled to the eye 201.

However, a portion of the light is not coupled into the waveguide 6a along ray 36. Input grating 20a is not 100% efficient and a portion of light passes straight through the input grating 20a along the x-direction on which it is substantially travelling. In a typical AR device this contribution would be ignored as it would be absorbed by the housing 2. However, in the present alignment system 100, the light that passes straight through the input grating 20a and subsequently passes through aperture 8a as indicated by ray 34. This light 34 is then incident on screen 101. In this way, ray 34 forms an image at the screen 101 that is representative of the image emitted by the projector 4a which has not been coupled into the waveguide 6a. As will be described below, a reference image on the screen 101 can be used to align the projector 4a with respect to the housing 2.

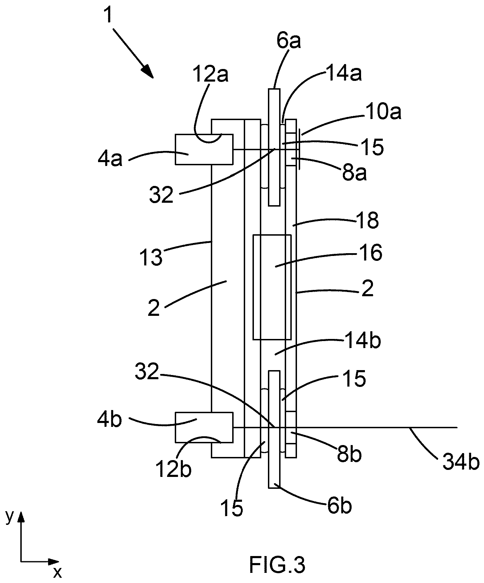

As outlined above, Figure 2 only shows a portion of the headset 1 during the alignment process. Figure 3 shows a schematic top down cross-sectional view of the AR headset 1 where the second projector 4b is in the process of being aligned. As can be seen in Figure 3 the light 34b passes through the aperture 8b in the housing 2 of the headset 1 for use in aligning the projector 4b. The projector 4a in Figure 3 has been aligned prior to the alignment process of projector 4b. Cover 10a has been fixed over aperture 8a to prevent light being emitted from the device through aperture 8a. The light that travels through the aperture 8a is absorbed by the cap 10a. Although ray 34b is shown as a single ray it would have some angular spread.

Figure 4A to 4D show screen 101 when viewed from the position of the wearer shown in Figure 2. Located on screen is reference image 42 which is used for alignment of the projectors 4a 4b. Reference image 42 is formed of a horizontal line 48 and three vertical lines 44a, 44b and 46 intersecting said horizontal line and equally distanced from each other. The horizontal line 48 and vertical lines 44a, 46, 44b effectively make up three cross shapes that are joined together by the horizontal line 48.

Also shown in Figure 4A to 4D are images 50a and 50b. Image 50a is formed from ray 34 from projector 4a, which has passed through input grating 20a and aperture 8a before being incident on target 101. Image 50b is formed from the equivalent of ray 34 from projector 4b, which has passed through the input grating (of waveguide 6b) and the aperture 8b before being incident on target 101.

Figure 4A to 4D also shows images 52a and 52b. These are virtual images and are not actually present at the screen 101. Image 52a corresponds to the image viewed by the wearer formed by light 38 coupled out of the output grating 22a of waveguide 6a. Image 52b corresponds to the image viewed by the wearer formed by light 38 coupled out of the output grating of waveguide 6b. Each of images 50a, 50b, 52a, and 52b are cross shaped.

The alignment of the projector 4a on housing 2 is achieved through aligning image 50a with reference image 42 such that the cross shape directly overlays the intersection between vertical line 44a and horizontal line 48. Likewise the alignment of the projector 4b on housing 2 is achieved through aligning image 50b with reference image 42 such that the cross shape directly overlays the intersection between vertical line 44b and horizontal line 48.

Once the alignment of projectors 4a and 4b has been achieved, through aligning images 50a and 50b as described above, the positioning of each of the waveguides 6a 6b needs to be corrected to ensure convergence of the virtual image viewed by each of the wearer's eyes when viewing through the output grating. This is achieved through aligning images 52a and 52b with the vertical line 46 such that the cross shapes of images 52a and 52b directly overlay the intersection between vertical line 46 and horizontal line 48.

The screen 101 is positioned at a distance at which convergence of the virtual image is desired. Therefore, though viewing the images 52a 52b convergence can be achieved as described above. In addition, the reference image(s) on the screen (e.g. 42are selected as a position that represents correct alignment of the projectors (and waveguides) when the housing is at a known position with respect to the target. Thus, the housing 2 is at a known position and orientation with respect to the screen when the alignment process is taking place.

As can be seen in Figure 4A neither projector 4a 4b is correctly aligned, for instance Figure 4A may represent when the projectors 4a 4b are first placed on the housing 2. Although when placed on the housing 2 the projectors may be roughly aligned, such that the light 32 is substantially parallel to the x-direction and therefore passes through the aperture in the housing, precise alignment in these AR devices is required. Through adjusting the position of the projectors 4a 4b on the housing 2 the correct alignment can be achieved. Adjusting the position of the projectors 4a 4b may involve an angular adjustment of the projectors 4a 4b. These angular adjustments may be through pitch, yaw, and/or roll. For instance, this may involve moving the projectors 4a 4b up or down, left or right, or tilting the projectors forwards or backwards depending on the location and orientation of the image 50a 50b with respect to the reference image.

Figure 4B shows the image 50a which has been aligned with the reference image such that it directly overlays the cross formed by the intersection between vertical line 44a and horizontal line 42. This has been achieved through tilting projector 4a upwards and to the right with respect to its position in Figure 4A. This indicates that projector 4a is correctly aligned. At this stage, the position of projector 4b has not been adjusted compared to in Figure 4A.

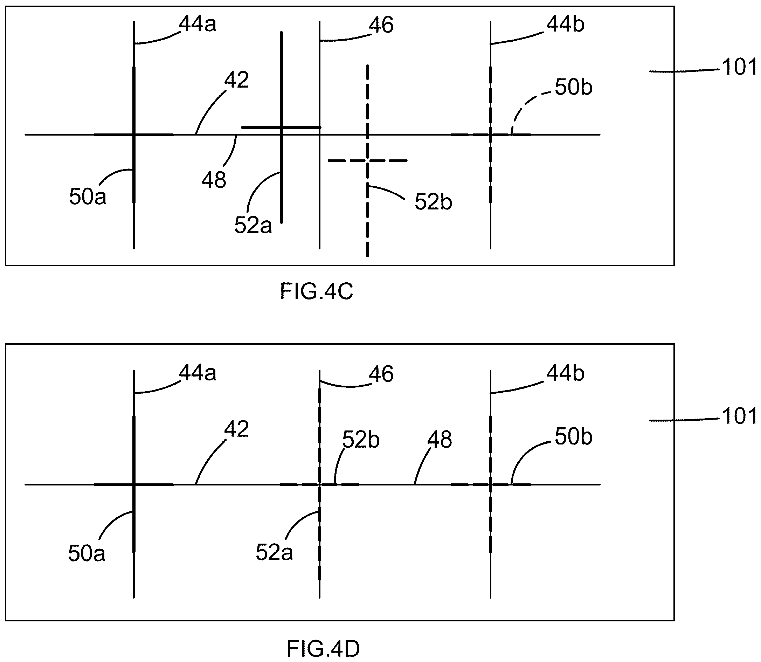

Figure 4C shows the image 50b which has been aligned with the reference image such that it directly overlays the cross formed by the intersection between vertical line 44b and horizontal line 42. This has been achieved through tilting projector 4b upwards and to the left with respect to its position in Figure 4B. This indicates that projector 4b is correctly aligned. The projector 4a has not been moved and is still aligned correctly as indicated by image 50a being at the same position as in Figure 4B.

Thus, alignment of the both projectors 4a 4b with respect to the housing has been achieved in Figure 4C.

Once projectors 4a 4b are both correctly aligned with respect to the housing alignment of the waveguides 6a 6b is required to ensure convergence of images 52a 52b. As can be seen in Figure 4C images 52a and 52b do not converge. Thus, the angular position of waveguides 6a 6b may each be adjusted by moving the waveguide through pitch and yaw. The waveguides 6a 6b are adjusted, at the same time, or successively, until image 52a and image 52b overlay one another, and so that they overlay the cross shape formed by the intersection of vertical line 46 and horizontal line 48, as shown in Figure 4D. Figure 4D shows the position of images 50a 50b 52a 52b when the projectors 4a 4b and waveguides 6a 6b are correctly aligned on the housing 2. Once this is achieved the projectors 4a 4b and waveguides 6a 6b may be affixed to the housing such that their position is not movable. This may include glue or other fixing means as discussed above.

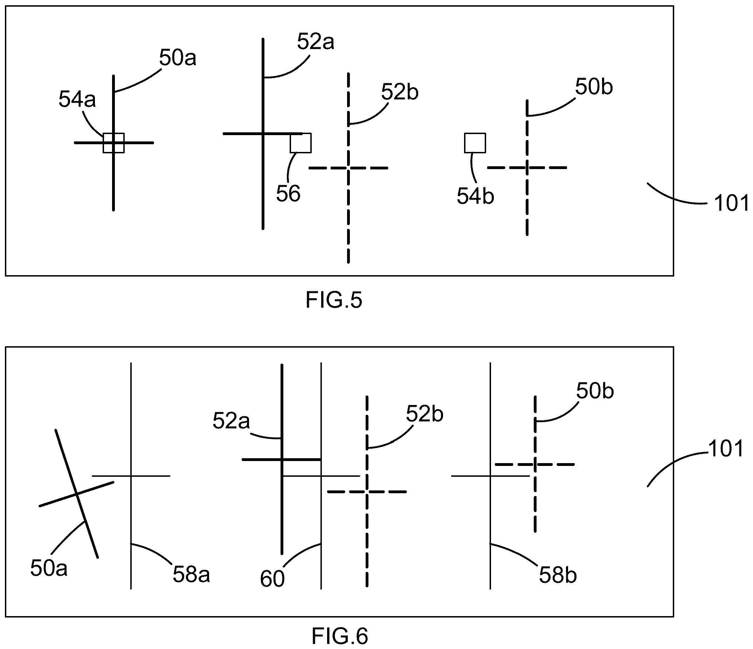

The reference images shown in Figure 4A-D are just one example of how alignment may be carried out. Figure 5 shows an alternative arrangement of reference images located at the target screen 101. Images 50a, 50b, are images from projectors 4a 4b as outlined above in relation to Figure 4A-D. Images 52a 52b are virtual images from projectors 4a 4b viewed as outlined above in relation to Figure 4A-D. Target reference images are formed of three squares 54a 56 54b offset from one another along a horizontal axis.

Square 54a indicates the correct alignment position of projector 4a. Thus, to achieve alignment of projector 4a the centre of the cross of image 54a must be positioned at the centre of square 54a. As shown in Figure 5 projector 4a is correctly aligned.

Square 54b indicates the correct alignment position of projector 4b. Thus, to achieve alignment of projector 4b the centre of the cross of image 54b must be positioned at the centre of square 54b. As shown in Figure 5 projector 4b is not correctly aligned.

Square 56 indicates the position to which images 52a 52b must be aligned to ensure correct alignment of waveguides 6a 6b to ensure convergence of the images from both projectors 4a 4b. As shown in Figure 5 this alignment of the waveguides has not been achieved.

Figure 6 shows an alternative arrangement of reference images located at the target screen 101. The example shown in Figure 6 shows a series of three cross shaped reference images spaced apart from each other.

Cross 58a indicates the correct alignment position of projector 4a. Thus, to achieve alignment of projector 4a the image 50a must be positioned on top of cross 58a. Cross 58b indicates the correct alignment position of projector 4b. Thus, to achieve alignment of projector 4b the image 52b must be positioned on top of cross 58b. Cross 60 indicates the position to which images 52a 52b must be aligned to ensure correct alignment of waveguides 6a 6b to ensure convergence of the image. As shown in Figure 5 the alignment of the waveguides 6a 6b and projectors 4a 4b has not been achieved. It can be seen that image 50a requires a roll angular adjustment due to the origination of the image compared to image 50a and the reference image 58a.

Although it is described above that the waveguide is in place when carrying out the projector alignment this is no necessarily the case. For instance, the waveguides may be added after the alignment of images 50a and 50b has been carried out. Through this approach of adding the waveguide to the housing after this initial alignment virtual images 52a 52b will not be visible until the waveguide has been added. After the waveguide has been added the alignment of images 50a 50b may need a further slight adjustment when in reflection mode due to the effect of the waveguides causing a slight shift in these images.

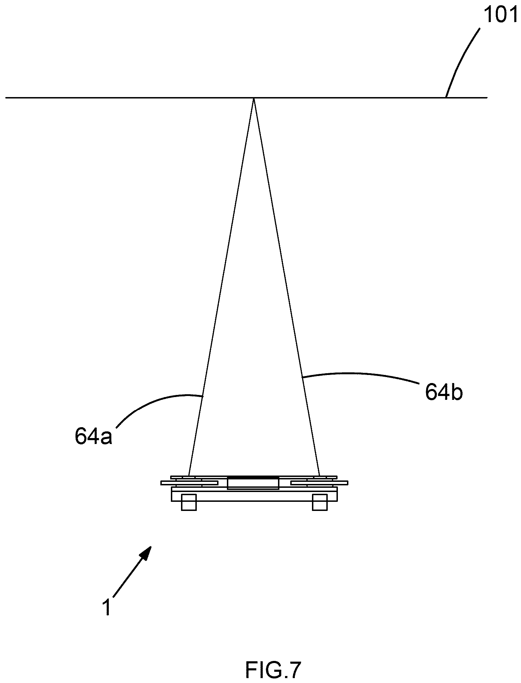

Figure 7 shows a schematic top down cross-sectional view of the AR headset 1 and screen 101. As can be seen rays 64a 64b show the view that the wearer sees when looking through the waveguides 6a 6b forming virtual images 52a 52b as described above in relation to Figure 4A-D. For instance, ray 64a forms image 52a and ray 64b forms image 52b. The screen 101 is at the convergence distance. As can be seen, convergence has been achieved as shown in Figure 4D.

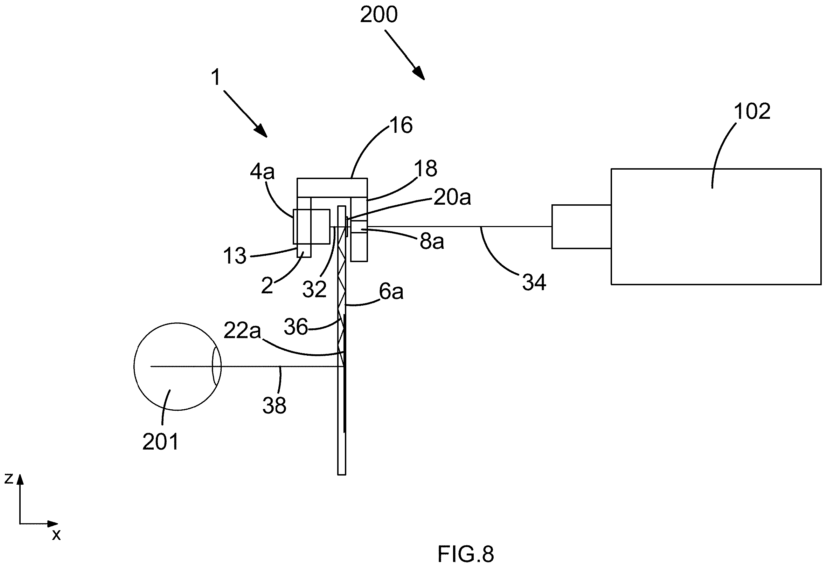

Figure 8 is a schematic side on cross-sectional view of a further example system 200 for aligning the projector 4a on the AR device 1 as shown in Figure 1. The difference between the system 100 shown in Figure 2 and the system 200 shown in Figure 8 is that a camera 102 is used to collect the light 34 after exiting through the aperture 8a of housing 2, rather than the light being projected directly onto a screen 101 where the image is formed. The camera 102 is connected to an electronic display (not shown) on which the image is displayed showing its position with respect to a fixed reference point which indicates the correct alignment position of the image. For instance, the display may show image 50a and reference image 58a as shown in Figure 6. The user can then adjust the position of projector 4a by using image 50a displayed on the display as a guide until it is displayed on the display overlapping reference image 58a.

The advantage of using a camera 102 in this arrangement rather than projecting directly on a screen is that less physical space is required to carry out the projector alignment. The camera does not need to be at the convergence distance from the AR headset 1 as generally required for the screen 101.

The camera 102 may be coupled to one or more computing devices capable of processing the light detected, such as to correct for any distortions in the formed image to aid alignment.

The same camera 102 may be used to align both projectors 4a 4b. For instance, once projector 4a has been correctly aligned the camera may then be placed adjacent to the aperture 8b through which projector 4b emits light 34. In other arrangements, there may be separate camera 102 used to align each projector 4a 4b. In this way, both projectors 4a 4b can be displayed on the display at the same time and aligned simultaneously if desired.

Even when using cameras 102 to align the projectors 4a 4b a screen 101 may still be used to ensure correct waveguide alignment is achieved to ensure convergence of the images, for instance using reference image 60 shown in Figure 6.

The positioning of the camera is not limited to that as shown in Figure 7, and the camera may be moved or positioned as appropriate. In other arrangements, the camera may be alternatively positioned where eye 201 is located, adjacent to the output region of the waveguide. In this arrangement the screen 101 may also be present with the camera viewing the screen 101 through the output grating viewing the images (both real and virtual) as shown in Figures 4 to 6. The view seen by the camera can then be output onto a computer monitor which the user can view and make the relevant adjustments to the positioning of the projectors and, if necessary, the waveguide as described above. Advantageously, using a camera in this manner, rather than a user's eye, can help provide a steady image improving the accuracy of the alignment.

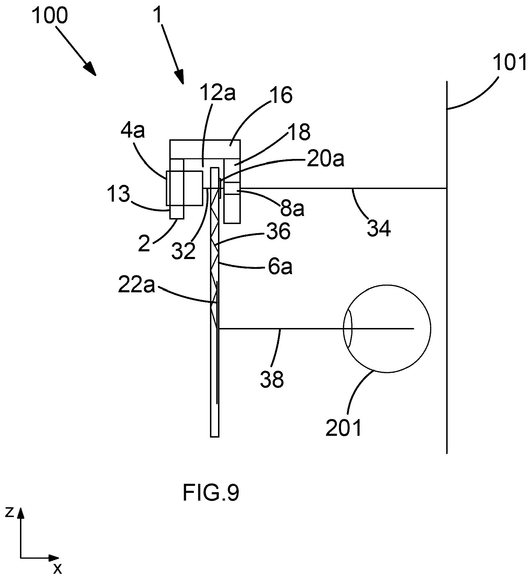

Figure 9 shows a schematic side on cross-sectional view of an example system 100 for aligning the projector 4a on the AR device 1 such as shown in Figure 1. The same features are shown having the same reference numerals as in Figure 1 and 2. In the system shown in Figure 9 the waveguide is acting in transmission mode, rather than reflection mode as in Figure 2. In other words, the user's eye is on the opposite side of the waveguide to the projector.

The method of aligning the projector 4a when in transmission mode differs slightly than when in reflection mode. In transmission mode the alignment of the projector can be carried out as described above. For instance, the alignment of real images 50a and 50b with reference 58a and 58b on the screen, respectively. However, when in transmission mode the adjustment of the waveguide has no effect on convergence of the virtual image. Therefore, the alignment of the virtual images 52a and 52b, as described above for reflection mode, is not required. When the user looks through the waveguide 6a, as shown in Figure 9, the virtual images are converged through the adjustments made to the projectors alone. This difference can be explained by the fact that the waveguide when in transmission acts as a window, whereas when in reflection it acts as a mirror, so in transmission mode is not sensitive to angular offset.

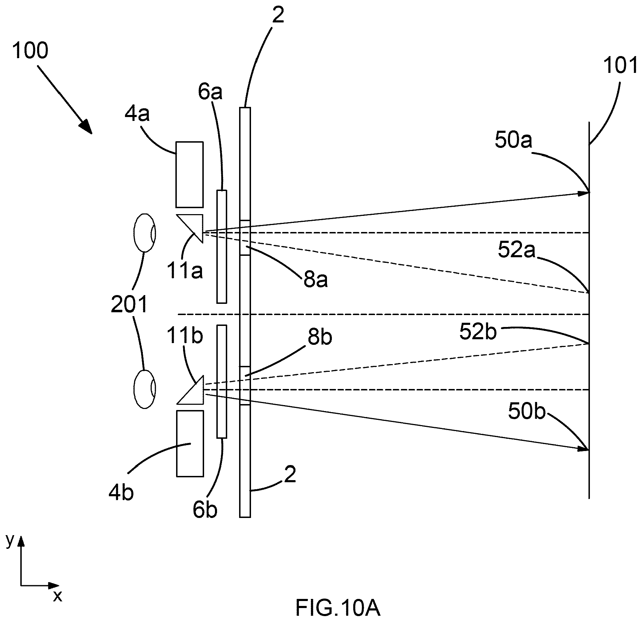

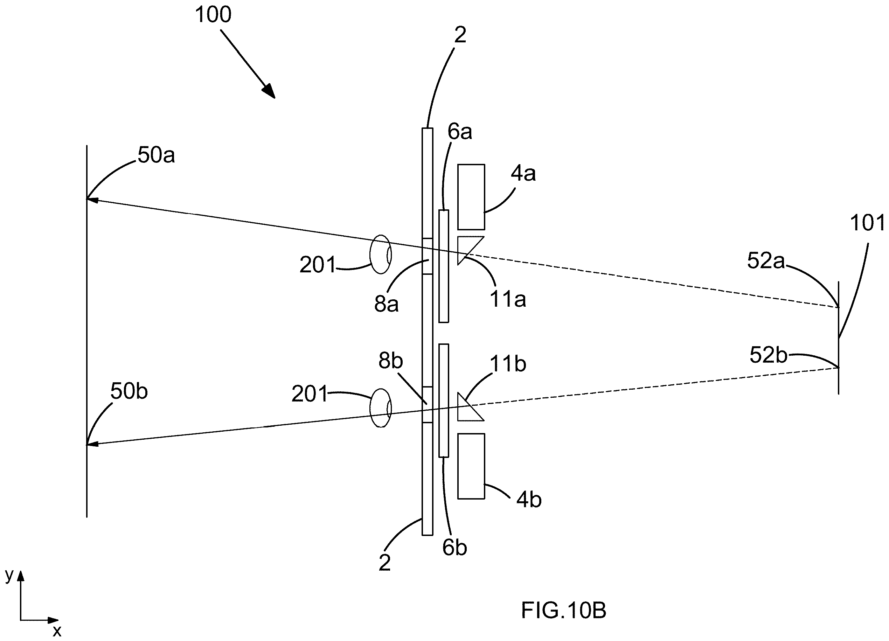

Figures 10A and 10B show schematic top down view of an AR headset according to a further arrangement when in reflection mode (Figure 10A) and transmission mode (Figure 10B).

Looking first at Figure 10A which shows the AR device in reflection mode, it can be seen that when viewing from the perspective of where the output region of the waveguide is located, by a user's eye 201 or camera, real images 50a and 50b (as described with respect to Figure 4A- 4D) can be seen as diverging images as shown. These may be aligned to a reference image as described previously to ensure the projectors are at the desired location. Once the waveguides 6a 6b have been placed on the housing the virtual images 52a 52b can then be viewed and through adjustment of the waveguides 6a 6b the virtual images can be made to converge, as described above in relation to Figure 4A-4D.

Looking now at Figure 10B which shows the AR device in transmission mode, it can be seen that alignment of the projector is carried out through looking in the opposite direction to shown in Figure 10A given the nature of the device. In this arrangement images 50a and 50b may be viewed by a user, or camera, on the wall 101 where again diverging images are displayed, such as those shown in Figure 4A to 4D. Virtual images 52a 52b are converged through alignment of the projectors using images 50a 50b, no adjustment of the waveguide is necessary to achieve convergence of the virtual images.

In the systems shown in Figure 10A and 10B images 50a and 50b may be viewed after the waveguides 6a 6b have been added to the housing as described above, but also prior to the waveguide 6a 6b being placed on the housing 2 as outlined previously.

A further difference as shown in the AR devices 100 shown in Figures 10A and 10B to the AR devices shown in the other figures is that the projectors 4a 4b are not positioned such that light emitted from the projectors is directly incident on the waveguides 6a 6b after being emitted by the projectors. Instead the projectors are positioned such that light is emitted along the ±y-direction. A prism 11a 11b is positioned adjacent to each projector 4a 4b along the ±y axis such that the prisms turn the light such that it travels along the x-direction before being coupled into the waveguide 6a 6b and through the aperture 8a 8b as described above. It would be understood that the positioning of the projectors 4a 4b as described above may include the positioning of the projectors 4a 4b, prisms 11a 11b, or both the prisms and projectors.

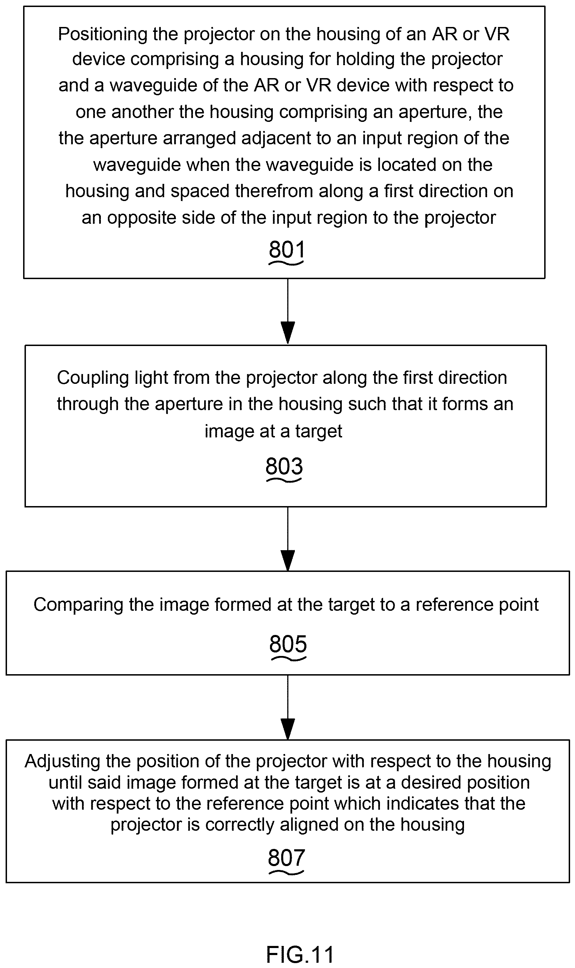

Figure 11 is a flow diagram that sets out an example method of aligning a projector on an augmented reality (AR) as described in detail above.

At step 801 the method involves positioning the projector on the housing of an AR or VR device comprising a housing for holding the projector and a waveguide of the AR or VR device with respect to one another the housing comprising an aperture, the aperture arranged adjacent to an input region of the waveguide when the waveguide is located on the housing and spaced therefrom along a first direction on an opposite side of the input region to the projector.

At step 803 the method involves coupling light from the projector along the first direction through the aperture in the housing such that it forms an image at a target.

At step 805 the image formed at the target is compared to a reference point.

At step 807 the position of the projector is adjusted with respect to the housing until said image formed at the target is at a desired position with respect to the reference point which indicates that the projector is correctly aligned on the housing.

The projectors 4a 4b as outlined above may be any type of light engine that is capable of projecting light into a waveguide. This may be any type of picoprojector. For instance, the projector might comprise a liquid crystal on silicon, LCOS, panel and a light source. The LCOS panel may be positioned in the light path between the light source and the input region of the waveguide. The LCOS panel may be responsible for forming the image with the light incident on it from the lightsource. The image may then be projected as an input pupil onto the input region of the waveguide. The light source may be an array of LEDs. Alternatively, any other type of image generating means, or light source may be used. For instance, the light source may be a lamp. The panel may be any type of non-self-emissive panel, including transmissive liquid crystal display, reflective liquid crystal panel, digital light processing panels, or dynamic mirror arrays. The projector may be polychromatic. Alternatively, the projector may be monochromatic.

Having described aspects of the disclosure in detail, it will be apparent that there are a number of other alternatives or modifications to the arrangements described above that would be possible without departing from the scope of aspects of the disclosure as defined in the appended claims.

The housing 2 shown in the examples described above is just one example of housing and should not be taken to be limiting. For instance, any other arrangement of housing could be used. This may depend on the nature of the AR/VR device, such as glasses, goggles or any other type of AR/VR device.

In addition, the positioning of the projectors 4a 4b as described above should not be taken as limiting. For instance, rather than being positioned such that the light from the projector is directly coupled into the waveguide, in other arrangements one or more optical components may be positioned on the optical path between the projector and the waveguide to ensure light is coupled into the waveguide. For instance, the projector may be arranged such that it emits light perpendicular to the direction shown in Figure 1, such as along the y-direction, as shown in Figures 10A and 10B. In this arrangement a prism, mirror or other optical component may be used to change the path of the light from the projector such that it is still incident on the waveguide. Adjusting the position of the projectors may further comprise adjusting the position of this further optical component to ensure alignment.

The number of projectors is not limited to two. In other arrangements, only a single projector may be present and the alignment system may be for aligning that single projector. In other arrangements there may be more than two projectors.

Rather than having a cap which is used to cover the aperture after alignment is complete, any other way of preventing light from passing through the aperture may be used. For instance, the aperture may be filled, rather than placing a cover over the aperture. For example, the aperture may be filled with any of a polymer, silicone, cement, or any other insertable plug.

The input grating as shown in the drawings as described above is a reflection input grating. However, the invention is not limited as such and the input grating may alternatively be operating in transmission mode. Equally the output grating may be reflective and/or transmissive.

It is described above that the alignment of the projectors is carried out by a user. However, the system may equally be used in a feedback loop where a machine is responsible for adjusting the position of the projectors, for instance, when using the cameras as described above.

The display as described above for displaying the image captured by camera 102 may be a monitor or any other type of visual display to which the camera may be connected. The screen 101 may be a wall or a screen that has been placed with the purpose of being used for the alignment.

The device 1 described above is a headset. However, this alignment method/system could be used for aligning a projector on any type of AR device. In addition, it is not specifically limited to AR and may instead be used for VR devices.

Once the projectors, and waveguides, are correctly positioned they may be glued into place to ensure that their position is fixed. Alternatively, or in addition, any other means of fixing may be used. For instance, any type of adhesive may be used or an additional component may be attached to the housing to keep them in place.

In other arrangements, the alignment of the projectors may be carried out prior to the waveguides being attached to the housing. In this way, the projectors may be positioned adjacent the apertures and said comparing and aligning with respect to the reference image carried out.

## Claims

1. An augmented reality, AR, or virtual reality, VR, device (1), the AR or VR device comprising:
a waveguide (6a, 6b), comprising an input region (20a) configured to receive light incident along a first direction, and an output region (22a), wherein the waveguide is configured such that a first portion of the light passes along the waveguide, in a direction substantially perpendicular to the first direction, by total internal reflection towards the output region where it is outcoupled to a viewer to thereby form an image;
a projector (4a, 4b) arranged adjacent to the waveguide, the projector for projecting the light into the waveguide at the input region;
a housing (2) for holding the projector and the waveguide with respect to one another, **characterized by** the housing comprising an aperture (8a), the aperture arranged adjacent to the input region and spaced therefrom along the first direction on an opposite side of the input region in relation to the projector.

2. The device of claim 1, wherein the aperture (8a) extends through the housing (2) along the first direction.

3. The device of any of claim 1 or 2, wherein the aperture (8a) has a first end and a second end, such that the aperture extends from the first end to the second end, the first adjacent to the input region (20a), wherein the aperture is closed at the second end.

4. The device of claim 3, wherein a cover (10a) is positioned at the second end of the aperture (8a), such that the aperture is closed at the second end.

5. The device of any preceding claim, wherein the input region (20a) is a diffractive input grating.

6. The device of any preceding claim, wherein the device comprises a pair of projectors (4a, 4b) and a pair of waveguides (6a, 6b), each having an associated aperture (8a, 8b) arranged adjacent to the input region (20a) of its associated waveguide and spaced therefrom along the first direction on an opposite side of the input region to its associated projector.

7. A method of aligning a projector on an augmented reality,AR, or virtual reality, VR, device, the AR or VR device comprising a housing for holding the projector and a waveguide of the AR or VR device with respect to one another, the housing comprising an aperture, the aperture arranged adjacent to an input region of the waveguide when the waveguide is located on the housing and spaced therefrom along a first direction on an opposite side of the input region in relation to the projector, the method comprising:
positioning (801) the projector on the housing;
coupling (803) light from the projector along the first direction through the aperture in the housing such that it forms an image at a target;
comparing (805) the image formed at the target to a reference point;
adjusting (807) the position of the projector with respect to the housing until said image formed at the target is at a desired position with respect to the reference point which indicates that the projector is correctly aligned on the housing.

8. The method of claim 7, wherein the reference point is a reference image having at least one characteristic to which the image formed at the target is to be aligned.

9. The method of claim 8, wherein the at least one characteristic is a shape of at least a portion of the reference image, and a shape of at least a portion of the image formed at the target is identical to the shape of at least a portion of the reference image.

10. The method of any of claims 7 to 9, further comprising capturing, with a camera, the image formed at the target; and
displaying on a screen said image formed at the target and said reference point and performing said steps of comparing and adjusting.

11. The method of any of claims 7 to 10, wherein positioning (801) the projector on the housing involves positioning the projector on the housing adjacent the input region of the waveguide; and
wherein coupling light from the projector along the first direction through the aperture in the housing such that it forms an image at a target further comprises:
coupling light from the projector onto the input region of the waveguide, such that the light is incident on the input region in a first direction such that:
a first portion of the light passes along the waveguide in a direction substantially perpendicular to the first direction by total internal reflection towards an output region of the waveguide for outcoupling light to a viewer; and
a second portion of the light passes straight through the waveguide in the first direction and through the aperture in the housing such that it forms an image at a target.

12. The method of claims 11, wherein the projector and waveguide are a first projector and a first waveguide, and the AR or VR, device comprises a second projector and a second waveguide, the method further comprising aligning the second projector on the housing through performing the method of any of claims 7 to 11 on the second projector.

13. The method of claim 12, further comprising, after the first projector and the second projector are correctly aligned on the housing:
viewing a first image formed by the first portion of light from the first projector after being outcoupled at the output region of the first waveguide;
viewing a second image formed by the first portion of light from the second projector after being outcoupled at the output region of the second waveguide;
adjusting the position of the first waveguide and second waveguide until said first image and second image are overlaid on one another.

14. The method of any of claims 7 to 13, further comprising after the projector is correctly aligned, applying a cover to the aperture of the housing such that light can no longer pass through said aperture.

15. A system for aligning a projector on an augmented reality, AR, or virtual reality, VR, device, the system comprising:
an AR or VR device (1) comprising a projector (4a, 4b), a housing (2) for holding the projector and a waveguide (6a, 6b) of the AR or VR device with respect to one another, the housing comprising an aperture (8a), the aperture arranged adjacent to an input region of the waveguide when the waveguide is located on the housing and spaced therefrom along a first direction on an opposite side of the input region in relation to the projector; and
a target for providing a reference point to which an image formed on the target can be compared to thereby align the projector on the housing, wherein the system is configured to perform the method of any of claims 7 to 14.

## Patentansprüche

1. Vorrichtung (1) der erweiterten Realität, AR, oder virtuellen Realität, VR, wobei die AR- oder VR-Vorrichtung Folgendes umfasst:
einen Wellenleiter (6a, 6b), umfassend einen Eingangsbereich (20a), der konfiguriert ist, um entlang einer ersten Richtung einfallendes Licht aufzunehmen, und einen Ausgangsbereich (22a), wobei der Wellenleiter so konfiguriert ist, dass ein erster Abschnitt des Lichts entlang des Wellenleiters in einer Richtung im Wesentlichen senkrecht zur ersten Richtung durch Totalreflexion zum Ausgangsbereich geht, wo es für einen Betrachter ausgekoppelt wird, um dadurch ein Bild zu bilden;
einen Projektor (4a, 4b), der neben dem Wellenleiter angeordnet ist, wobei der Projektor zum Projizieren des Lichts in den Wellenleiter am Eingangsbereich dient;
ein Gehäuse (2) zum Halten des Projektors und des Wellenleiters in Bezug zueinander, **dadurch gekennzeichnet, dass**
das Gehäuse eine Apertur (8a) umfasst, wobei die Apertur neben dem Eingangsbereich und von diesem beabstandet entlang der ersten Richtung auf einer in Bezug auf den Projektor gegenüberliegenden Seite des Eingangsbereichs angeordnet ist.

2. Vorrichtung nach Anspruch 1, wobei sich die Apertur (8a) durch das Gehäuse (2) entlang der ersten Richtung erstreckt.

3. Vorrichtung nach einem von Anspruch 1 oder 2, wobei die Apertur (8a) ein erstes Ende und ein zweites Ende aufweist, sodass sich die Apertur vom ersten Ende zum zweiten Ende erstreckt, das erste neben dem Eingangsbereich (20a), wobei die Apertur am zweiten Ende geschlossen ist.

4. Vorrichtung nach Anspruch 3, wobei eine Abdeckung (10a) am zweiten Ende der Apertur (8a) positioniert ist, sodass die Apertur am zweiten Ende geschlossen ist.

5. Vorrichtung nach einem vorstehenden Anspruch, wobei der Eingangsbereich (20a) ein diffraktives Eingangsgitter ist.

6. Vorrichtung nach einem vorstehenden Anspruch, wobei die Vorrichtung ein Paar Projektoren (4a, 4b) und ein Paar Wellenleiter (6a, 6b) umfasst, die jeweils eine zugeordnete Apertur (8a, 8b) aufweisen, die neben dem Eingangsbereich (20a) ihres zugeordneten Wellenleiters und von diesem beabstandet entlang der ersten Richtung auf einer zu ihrem zugeordneten Projektor gegenüberliegenden Seite des Eingangsbereichs angeordnet ist.

7. Verfahren zum Ausrichten eines Projektors an eine Vorrichtung der erweiterten Realität, AR, oder virtuellen Realität, VR,
wobei die AR- oder VR-Vorrichtung ein Gehäuse zum Halten des Projektors und eines Wellenleiters der AR- oder VR-Vorrichtung in Bezug zueinander umfasst, wobei das Gehäuse eine Apertur umfasst, wobei die Apertur neben einem Eingangsbereich des Wellenleiters angeordnet ist, wenn der Wellenleiter sich auf dem Gehäuse und von diesem beabstandet entlang einer ersten Richtung in Bezug auf den Projektor auf einer gegenüberliegenden Seite des Eingangsbereichs befindet, wobei das Verfahren umfasst:
Positionieren (801) des Projektors auf dem Gehäuse:
Koppeln (803) von Licht aus dem Projektor entlang der ersten Richtung durch die Apertur im Gehäuse, sodass es ein Bild an einem Ziel bildet;
Vergleichen (805) des am Ziel gebildeten Bildes mit einem Referenzpunkt;
Anpassen (807) der Position des Projektors in Bezug auf das Gehäuse, bis das am Ziel gebildete Bild in Bezug auf den Referenzpunkt, der angibt, dass der Projektor korrekt an das Gehäuse ausgerichtet ist, an einer gewünschten Position ist.

8. Verfahren nach Anspruch 7, wobei der Referenzpunkt ein Referenzbild ist, das mindestens ein Merkmal aufweist, an welches das am Ziel gebildete Bild ausgerichtet werden soll.

9. Verfahren nach Anspruch 8, wobei das mindestens eine Merkmal eine Form von mindestens einem Abschnitt des Referenzbildes ist, und eine Form von mindestens einem Abschnitt des am Ziel gebildeten Bildes mit der Form von mindestens einem Abschnitt des Referenzbildes identisch ist.

10. Verfahren nach einem der Ansprüche 7 bis 9, weiter umfassend Aufnehmen des am Ziel gebildeten Bildes mit einer Kamera; und
Anzeigen des am Ziel gebildeten Bildes und des Referenzpunkts auf einem Bildschirm und Durchführen der Schritte des Vergleichens und Anpassens.

11. Verfahren nach einem der Ansprüche 7 bis 10, wobei das Positionieren (801) des Projektors auf dem Gehäuse das Positionieren des Projektors auf dem Gehäuse neben dem Eingangsbereich des Wellenleiters beinhaltet; und
wobei das Koppeln von Licht aus dem Projektor entlang der ersten Richtung durch die Apertur im Gehäuse, sodass es ein Bild an einem Ziel bildet, weiter umfasst:
Koppeln von Licht aus dem Projektor auf den Eingangsbereich des Wellenleiters, sodass das Licht auf den Eingangsbereich in einer ersten Richtung einfällt, sodass:
ein erster Abschnitt des Lichts entlang des Wellenleiters in einer Richtung im Wesentlichen senkrecht zur ersten Richtung durch Totalreflexton zu einem Ausgangsbereich des Wellenleiters zum Auskoppeln von Licht für einen Betrachter geht; und
ein zweiter Abschnitt des Lichts direkt durch den Wellenleiter in der ersten Richtung und durch die Apertur im Gehäuse geht, sodass es ein Bild an einem Ziel bildet.

12. Verfahren nach Anspruch 11, wobei der Projektor und der Wellenleiter ein erster Projektor und ein erster Wellenleiter sind und die AR- oder VR-Vorrichtung einen zweiten Projektor und einen zweiten Wellenleiter umfasst, wobei das Verfahren weiter das Ausrichten des zweiten Projektors an das Gehäuse durch Durchführen des Verfahrens nach einem der Ansprüche 7 bis 11 am zweiten Projektor umfasst.

13. Verfahren nach Anspruch 12, weiter umfassend, nachdem der erste Projektor und der zweite Projektor korrekt an das Gehäuse ausgerichtet sind:
Betrachten eines ersten Bildes, das durch den ersten Abschnitt von Licht aus dem ersten Projektor gebildet wird, nachdem es am Ausgangsbereich des ersten Wellenleiters ausgekoppelt wurde;
Betrachten eines zweiten Bildes, das durch den ersten Abschnitt von Licht aus dem zweiten Projektor gebildet wird, nachdem es am Ausgangsbereich des zweiten Wellenleiters ausgekoppelt wurde;
Anpassen der Position des ersten Wellenleiters und des zweiten Wellenleiters, bis das erste Bild und das zweite Bild aufeinander überlagert sind.

14. Verfahren nach einem der Ansprüche 7 bis 13, weiter umfassend, nachdem der Projektor korrekt ausgerichtet ist, Anwenden einer Abdeckung an der Apertur des Gehäuses, sodass Licht nicht mehr durch die Apertur hindurchgehen kann.

15. System zum Ausrichten eines Projektors an einer Vorrichtung der erweiterten Realität, AR, oder virtuellen Realität, VR, wobei das System umfasst:
eine AR- oder VR-Vorrichtung (1), umfassend einen Projektor (4a, 4b), ein Gehäuse (2) zum Halten des Projektors und eines Wellenleiters (6a, 6b) der AR- oder VR-Vorrichtung in Bezug zueinander, wobei das Gehäuse eine Apertur (8a) umfasst, wobei die Apertur neben einem Eingangsbereich des Wellenleiters angeordnet ist, wenn der Wellenleiter sich auf dem Gehäuse und von diesem beabstandet entlang einer ersten Richtung in Bezug auf den Projektor auf einer gegenüberliegenden Seite des Eingangsbereichs befindet; und
ein Ziel zum Bereitstellen eines Referenzpunkts, mit dem ein am Ziel gebildetes Bild verglichen werden kann, um dadurch den Projektor an das Gehäuse auszurichten, wobei das System so konfiguriert ist, dass es das Verfahren nach einem der Ansprüche 7 bis 14 durchführt.

## Revendications

1. Dispositif (1) de réalité augmentée, AR, ou de réalité virtuelle, VR, le dispositif AR ou VR comprenant :
un guide d'ondes (6a, 6b), comprenant une région d'entrée (20a) configurée pour recevoir de la lumière incidente le long d'une première direction, et une région de sortie (22a), dans lequel le guide d'ondes est configuré de telle sorte qu'une première portion de la lumière passe le long du guide d'ondes, dans une direction sensiblement perpendiculaire à la première direction, par réflexion interne totale vers la région de sortie où elle est découplée vers un spectateur pour ainsi former une image ;
un projecteur (4a, 4b) agencé de manière adjacente au guide d'ondes, le projecteur étant destiné à projeter la lumière dans le guide d'ondes au niveau de la région d'entrée ;
un boîtier (2) destiné à maintenir le projecteur et le guide d'ondes l'un par rapport à l'autre, **caractérisé par**
le boîtier comprenant une ouverture (8a), l'ouverture étant agencée de manière adjacente à la région d'entrée et espacée de celle-ci le long de la première direction sur un côté opposé de la région d'entrée par rapport au projecteur.

2. Dispositif selon la revendication 1, dans lequel l'ouverture (8a) s'étend à travers le boîtier (2) le long de la première direction.

3. Dispositif selon l'une quelconque de la revendication 1 ou la revendication 2, dans lequel l'ouverture (8a) présente une première extrémité et une seconde extrémité, de telle sorte que l'ouverture s'étend depuis la première extrémité jusqu'à la seconde extrémité, la première de manière adjacente à la région d'entrée (20a), dans lequel l'ouverture est fermée au niveau de la seconde extrémité.

4. Dispositif selon la revendication 3, dans lequel un couvercle (10a) est positionné au niveau de la seconde extrémité de l'ouverture (8a), de telle sorte que l'ouverture soit fermée au niveau de la seconde extrémité.

5. Dispositif selon une quelconque revendication précédente, dans lequel la région d'entrée (20a) est un réseau de diffraction d'entrée.

6. Dispositif selon une quelconque revendication précédente, dans lequel le dispositif comprend une paire de projecteurs (4a, 4b) et une paire de guides d'ondes (6a, 6b), chacune présentant une ouverture associée (8a, 8b) agencée de manière adjacente à la région d'entrée (20a) de son guide d'ondes associé et espacée de celle-ci le long de la première direction sur un côté opposé de la région d'entrée vers son projecteur associé.

7. Procédé destiné à aligner un projecteur sur un dispositif de réalité augmentée, AR, ou de réalité virtuelle, VR, le dispositif AR ou VR comprenant un boîtier destiné à maintenir le projecteur et un guide d'ondes du dispositif AR ou VR l'un par rapport à l'autre, le boîtier comprenant une ouverture, l'ouverture étant agencée de manière adjacente à une région d'entrée du guide d'ondes lorsque le guide d'ondes est situé sur le boîtier et espacée de celle-ci le long d'une première direction sur un côté opposé de la région d'entrée par rapport au projecteur, le procédé comprenant :
positionner (801) le projecteur sur le boîtier ;
coupler (803) la lumière provenant du projecteur le long de la première direction à travers l'ouverture dans le boîtier de telle sorte qu'elle forme une image au niveau d'une cible ;
comparer (805) l'image formée au niveau de la cible à un point de référence ;
ajuster (807) la position du projecteur par rapport au boîtier jusqu'à ce que ladite image formée au niveau de la cible soit au niveau d'une position souhaitée par rapport au point de référence qui indique que le projecteur est correctement aligné sur le boîtier.

8. Procédé selon la revendication 7, dans lequel le point de référence est une image de référence présentant au moins une caractéristique sur laquelle l'image formée au niveau de la cible doit être alignée.

9. Procédé selon la revendication 8, dans lequel l'au moins une caractéristique est une forme d'au moins une partie de l'image de référence, et une forme d'au moins une partie de l'image formée au niveau de la cible est identique à la forme d'au moins une partie de l'image de référence.

10. Procédé selon l'une quelconque des revendications 7 à 9, comprenant en outre le fait de capturer, avec une caméra, l'image formée au niveau de la cible ; et
afficher sur un écran ladite image formée au niveau de la cible et ledit point de référence et mettre en œuvre lesdites étapes de comparaison et d'ajustement.

11. Procédé selon l'une quelconque des revendications 7 à 10, dans lequel le positionnement (801) du projecteur sur le boîtier implique un positionnement du projecteur sur le boîtier de manière adjacente à la région d'entrée du guide d'ondes ; et
dans lequel le couplage de la lumière en provenance du projecteur le long de la première direction à travers l'ouverture dans le boîtier de telle sorte qu'elle forme une image au niveau d'une cible comprend en outre :
coupler la lumière en provenance du projecteur sur la région d'entrée du guide d'ondes, de telle sorte que la lumière soit incidente sur la région d'entrée dans une première direction de telle sorte que :
une première portion de la lumière passe le long du guide d'ondes dans une direction sensiblement perpendiculaire à la première direction par réflexion interne totale vers une région de sortie du guide d'ondes pour découpler la lumière vers un spectateur ; et
une seconde portion de la lumière passe directement à travers le guide d'ondes dans la première direction et à travers l'ouverture dans le boîtier de telle sorte qu'elle forme une image au niveau d'une cible.

12. Procédé selon la revendication 11, dans lequel le projecteur et le guide d'ondes sont un premier projecteur et un premier guide d'ondes, et le dispositif AR ou VR comprend un second projecteur et un second guide d'ondes, le procédé comprenant en outre le fait d'aligner le second projecteur sur le boîtier à travers une mise en œuvre du procédé selon l'une quelconque des revendications 7 à 11 sur le second projecteur.

13. Procédé selon la revendication 12, comprenant en outre, après que le premier projecteur et le second projecteur sont correctement alignés sur le boîtier :
visualiser une première image formée par la première portion de lumière en provenance du premier projecteur après avoir été découplée au niveau de la région de sortie du premier guide d'ondes ;
visualiser une seconde image formée par la première portion de lumière en provenance du second projecteur après avoir été découplée au niveau de la région de sortie du second guide d'ondes ;
ajuster la position du premier guide d'ondes et du second guide d'ondes jusqu'à ce que lesdites première image et seconde image soient superposées l'une sur l'autre.

14. Procédé selon l'une quelconque des revendications 7 à 13, comprenant en outre, après que le projecteur est correctement aligné, le fait d'appliquer un couvercle sur l'ouverture du boîtier de telle sorte que la lumière ne puisse plus passer à travers ladite ouverture.

15. Système destiné à aligner un projecteur sur un dispositif de réalité augmentée, AR, ou de réalité virtuelle, VR, le système comprenant :
un dispositif AR ou VR (1) comprenant un projecteur (4a, 4b), un boîtier (2) destiné à maintenir le projecteur et un guide d'ondes (6a, 6b) du dispositif AR ou VR l'un par rapport à l'autre, le boîtier comprenant une ouverture (8a), l'ouverture étant agencée de manière adjacente à une région d'entrée du guide d'ondes lorsque le guide d'ondes est situé sur le boîtier et espacée de celle-ci le long d'une première direction sur un côté opposé de la région d'entrée par rapport au projecteur ; et
une cible destinée à fournir un point de référence auquel une image formée sur la cible peut être comparée afin d'aligner ainsi le projecteur sur le boîtier, dans lequel le système est configuré pour mettre en œuvre le procédé selon l'une quelconque des revendications 7 à 14.
